# EUROPEAN PATENT SPECIFICATION

(11) **EP 4 492 229 B1**
(45) Date of publication and mention of the grant of the patent: **03.12.2025**
(21) Application number: 24187063.3
(22) Date of filing: 08.07.2024
(51) Int. Cl.: G06F 9/455, G06F 21/56, G06F 21/53

(54) **SECURELY PERSISTING INFORMATION ACROSS SYSTEM REBOOTS**
SICHERES ERHALTEN VON INFORMATIONEN ÜBER SYSTEM-NEUBOOTS HINAUS
PERSISTANCE SÉCURISÉE D'INFORMATIONS DANS DES REDÉMARRAGES DE SYSTÈME

(30) Priority: 13.07.2023 IN 202341047186; 05.10.2023 US 202318376838
(43) Date of publication of application: 15.01.2025
(73) Proprietor: VMware LLC, Palo Alto, CA 94304 (US)
(72) Inventor: Parekh, Manisha Sameer Gambhir, 411045 Pune, Maharashtra (IN); Chaudhari, Kedar Bhalchandra, 411045 Pune, Maharashtra (IN); Phadnaviss, Niranjan, 580030 Hubli, Karnataka (IN); Barve, Mandar, 411045 Pune, Maharashtra (IN)
(74) Representative: Dilg, Haeusler, Schindelmann Patentanwaltsgesellschaft mbH

(56) References cited:
- US-A1- 2014 040 892
- US-B1- 11 669 441
- RUSSINOVICH MARK MARKRUSS@MICROSOFT COM ET AL: "Virtual machine preserving host updates for zero day patching in public cloud", PROCEEDINGS OF THE ACM INTERNATIONAL CONFERENCE ON SUPERCOMPUTING, ACMPUB27, NEW YORK, NY, USA, 21 April 2021 (2021-04-21), pages 114 - 129, XP058531768, ISBN: 978-1-4503-8338-7, DOI: 10.1145/3447786.3456232

## Description

### BACKGROUND

In virtualization environments, various virtual machines (VMs) are executed and managed by an underlying virtualization platform. The virtualization platform includes hardware resources that can be shared amongst the various VMs, such as central processing units (CPUs), transient memory devices such as random access memory (RAM), persistent memory devices such as hard disk drives or flash memory drives, networking devices such as network interface cards (NICs), and the like. Each VM typically executes an operating system (OS) such as MICROSOFT WINDOWS, LINUX, or the like, upon which various system and user processes are executed.

During operation and management of these VMs, there are several situations in which a given VM may experience a shutdown or restart event (a "reboot event" or "restart event"). Some of these reboot events are "graceful" events, where the event is intentionally performed on or by the VM. Example graceful reboot events include a restart of the VM after a scheduled patch of the guest OS, after certain software installations or software upgrades, as part of a regularly scheduled periodic system maintenance reboot, during a migration of a VM to another hardware platform, or the like. Other reboot events are "ungraceful" events, where the event is unexpected or unintentionally performed on or by the VM. Example ungraceful reboot events include a VM restart after a crash of the guest OS, VM restarts after a power outage affecting the underlying hardware platform supporting the VM, or the like.

Some processes executing on virtual machines (VMs) may seek to maintain some data between reboots. Some such data may be stored on persistent memory, and thus may be reloaded from persistent memory into transient memory upon reboot. However, storing data within persistent memory can introduce certain exposures to the data, such as security vulnerabilities.

Prior art document US 2014/040892 A1 discloses a method for swapping two virtual machines, including swapping virtual disks. Prior art document US 11 669 441 B1 discloses secure virtual machine reboots comprising scrubbing of memory. Prior art document "Virtual machine preserving host updates for zero day patching in public cloud", Russinovich et al, EuroSys 2021, Proceedings of the 16th European Conference on Computer Systems, 21 April 2021, pages 114-129, describes a method for live migration of virtual machines.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Aspects of the disclosure preserve data from transient memory through a reboot, restart, or VM migration of a particular virtual machine or computing system. Solutions include: terminating, by a first agent executing on the first VM and after user-space processes are terminated on the first VM, execution of user-space processes on the first VM; writing, by a first agent executing on the first VM, protected data from transient memory of the first VM to a virtual disk accessible by the first VM; shutting down the first VM; initiating a startup process of a second VM, the second VM mounting the virtual disk; and executing, at the second VM and prior to execution of user-space processes, a second agent, the second agent being configured to: read the protected data from the virtual disk into transient memory of the second VM; and delete the protected data from the virtual disk. In some examples, the shutdown process on the first VM and the startup process on the second VM are part of a reboot process of a single virtual machine on a single compute node.

### BRIEF DESCRIPTION OF THE DRAWINGS

The present description will be better understood from the following detailed description read in the light of the accompanying drawings, wherein:
FIG. 1 illustrates an example architecture that advantageously secures persistence of data across reboots or migrations of a virtual machines (VMs);
FIG. 2 and FIG. 3 are sequence diagrams illustrating processes for preserving protected data from transient memory between a reboot or migration of the VM X shown in FIG. 1;
FIG. 4 illustrates a flowchart of exemplary operations associated with shutting down a VM in an example architecture such as that of FIG. 1;
FIG. 5 illustrates a flowchart of exemplary operations associated with starting a VM in an example architecture such as that of FIG. 1;
FIG. 6 illustrates a virtualization architecture that may be used as a version of computing platform; and
FIG. 7 illustrates a block diagram of an example computing apparatus that may be used as a component of the example architectures of FIG. 1 and FIG. 6.

Any of the figures may be combined into a single example or embodiment.

### DETAILED DESCRIPTION

Solutions allow certain transient data of a virtual machine (VM) or other virtual computing instance (VCI) to be preserved between reboots while also protecting that data from certain types of malware attack vectors and vulnerabilities. A local agent executing on the VM initially stores and maintains some protected data in transient memory of the VM on a source host platform. In examples, the local agent is a thin agent (e.g., a guest introspection agent) for a malware prevention service (MPS) that is configured to provide malware detection and remediation services on the VM during operation, and the protected data is security policy and configuration information that defines aspects of how this particular VM is to be protected. This protected data may be accessible from a central policy manager associated with the MPS system. However, in some reboot situations, the VM may not necessarily have access to the policy manager during a restart and, as such, may leave the VM exposed if the policy information is not available.

During shutdown of the VM, the thin agent is configured to be one of the last services to be shut down. The local operating system defines a shutdown sequence in which user-space processes are stopped before kernel-space processes and services are stopped. The thin agent maintains the protected data in transient memory until the thin agent is instructed to shut down. During the shutdown of the thin agent, the thin agent is configured to write the protected data to a local filesystem (e.g., as a file within one of its own directories). After the write is complete, the thin agent completes its own shutdown and the operating system continues the remainder of the operating system (OS) shutdown sequence.

After shutdown is complete, the VM may be restarted on its source host or may be migrated to a target host. In either case, the filesystem (and thus the protected data) stays associated with the VM. Upon startup of the VM on the target host, the local operating system proceeds through a startup sequence in which kernel-space processes and services are started before user-space processes. Similar to the shutdown sequence, the thin agent is also configured to be started before any user-space processes. When the thin agent is first started, the thin agent reads the protected data from the filesystem into transient memory and deletes the protected data from the filesystem, in an example. The thin agent then uses the policy information from the protected data to configure malware prevention services locally on the VM. Once the thin agent has been started, the operating system continues with the remainder of the startup sequence, starting the remainder of the kernel-space processes and then proceeding to start up the user-space processes.

Aspects of the disclosure improve the operations of the computer by protecting sensitive data from certain types of malware attacks and exposures during migrations or other restarts of VMs. During shutdown, the timing of the writing of the protected data to the filesystem is configured (e.g., by the OS) to occur after all user-space applications have been terminated, thus insulating the protected data from some types of user-space malware attacks that can occur during or after data is written to a filesystem. Similarly, during startup, the timing of the reading of the protected data from the filesystem back into transient memory is configured (e.g., by the OS) to occur before any user-space applications have been started, then deleting that data before any user-space malware attacks can occur during or after a startup. Thus, aspects of the disclosure provide a practical, useful result to solve a technical problem in the domain of computing. Some examples secure the protected data from malware attacks during migrations or other restarts of VMs.

While described with reference to VMs in various examples, the disclosure is operable with any form of VCI including, but not limited to, VMs, containers, or other types of isolated software entities that can run on a computer system. Alternatively, or additionally, the architecture is generally operable in non-virtualized implementations and/or environments without departing from the description herein.

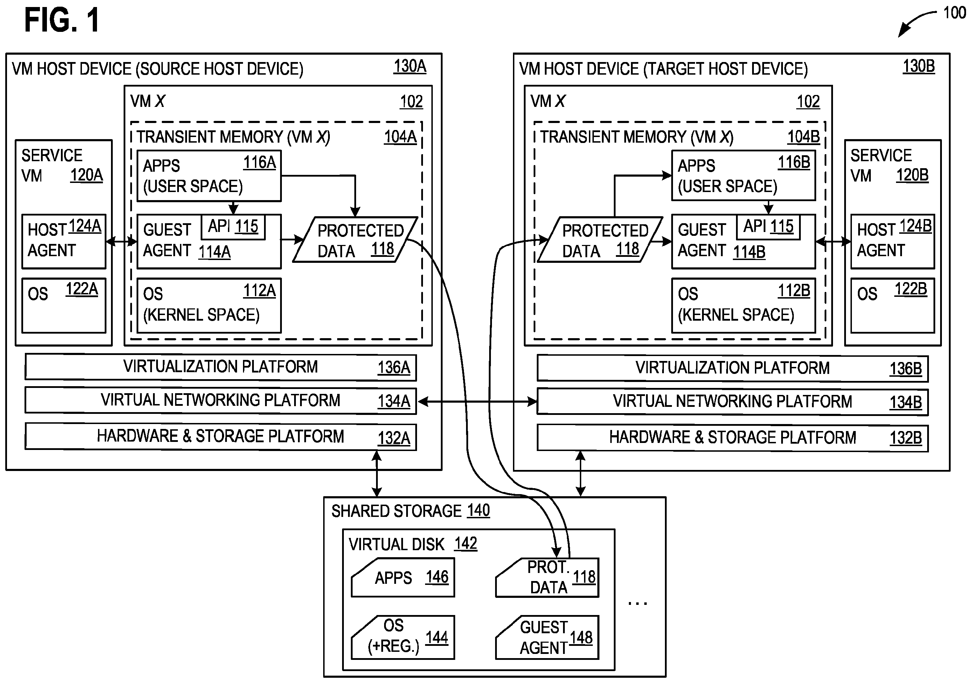

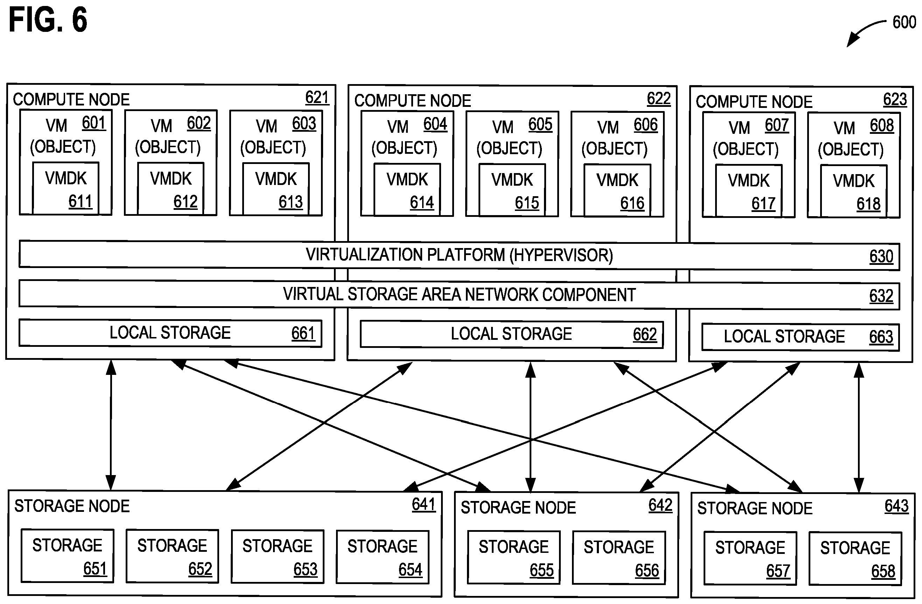

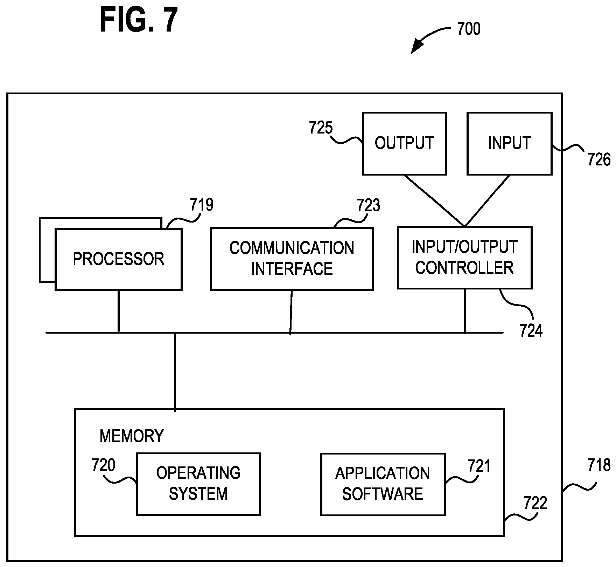

FIG. 1 illustrates an example architecture 100 that advantageously secures persistence of data across reboots or migrations of virtual machines (VMs). Architecture 100 uses a computing platform which may be implemented on one or more computing apparatus 718 of FIG. 7, and/or using a virtualization architecture 600 as is illustrated in FIG. 6. In this example, a particular virtual machine, VM X 102, is initially being executed as a guest VM (or source VM) on a VM host device (or "source host device") 130A, and is subsequently shut down and migrated to another host device (or "target host device") 130B. Prior to shutdown, VM X 102 stores protected data 118 in transient memory 104A. The architecture 100 is configured to maintain this protected data 118 across a VM migration event in which VM X 102 is migrated from the source host device 130A to the target host device 130B. In other words, the architecture 100 facilitates capturing the protected data 118 from transient memory 104A of VM *X* 102 while VM *X* 102 is still operational (e.g., before the VM X 102 is shut down) and recovering that protected data 118 into the transient memory 104B of VM X 102 as a part of the migration event. While various examples provided herein are described in relation to VM X 102 in a virtualized architecture, it should be understood that some aspects of the present disclosure can be practiced on computing devices outside of a virtualization environment (e.g., during reboots on non-VM systems, during manual hardware migrations in logically partitioned environments or via SAN migrations, or the like).

Architecture 100 includes the first VM host device (or source host device) 130A and the second VM host device (or target host device) 130B. Each of these host devices 130A, 130B is configured with a virtualization platform (or virtualization software) 136A, 136B that allows the host devices 130A, 130B to configure and execute one or more VMs such as a guest VMs (e.g., VM X 102) or service VMs 120A, 120B. Each of these host devices (or compute nodes) 130A, 130B includes various components of computing hardware, collectively represented as hardware and storage platforms (or just "hardware") 132A, 132B. This hardware 132A, 132B can include, for example, one or more central processing units (CPUs), transient memory devices (e.g., random access memory storage devices), persistent memory devices (e.g., hard disk drives, flash drives, or the like), network interface cards (NICs) or similar network interfaces, storage network cards or similar interfaces (e.g., host bus adapters for connection to direct-attached or storage area network-attached storage), graphics processing units (GPUs), input/output (I/O) devices (e.g., keyboard, mouse, display), or any such desktop or server-based computing components. The virtualization platform 136A, 136B of each host device 130A, 130B manages access to any or all of the underlying hardware 132A, 132B of the host device 130A, 130B for any of the VMs 102, 120A, 120B executing on the host device 130A, 130B. Further, in some examples, the virtualization platforms 136A, 136B provide a virtual networking platform 134A, 134B through which the host devices 130A, 130B and associated virtual machines or other computational units may communicate (e.g., over a physical network (not shown)).

Each of the host devices 130A, 130B, in this example, shares access to shared storage 140. Shared storage 140 represents persistent memory that is accessed and used by the host devices 130A, 130B and can include, for example, network-attached storage (NAS, cloud storage), storage area network (SAN) storage (e.g., enterprise storage arrays), or the like. This shared storage 140 is accessible by both host devices 130A, 130B and those host devices 130A, 130B may make portions of that shared storage 140 available to the virtualization platforms 136A, 136B and associated VMs 102, 120A, 120B (e.g., as virtual disks accessible by the VM during operation of that VM).

In this example, VM X 102 is assigned at least one storage partition, represented here as virtual disk 142, and that virtual disk 142 is formatted with a filesystem type supported by the OS 112A, 112B. Also in this example, the virtual disk 142 is a boot drive that stores an image of an operating system 144 (e.g., boot image, operating system binaries, configuration files, patch files, registry, and the like) that allows VM *X* 102 to boot and execute the OS 144 during operation (e.g., when VM *X* 102 is started on one of the host devices 130A, 130B). During operation, execution of the OS 144 consumes transient memory 104A, 104B within VM X 102, represented here as OS 112A, 112B (e.g., "kernel space"). Further, the virtual disk 142 also stores files associated with various applications (e.g., binaries, data, log files, and the like), represented here as apps 146. These apps 146 can include any applications that can be installed and executed on the OS 112A, 112B which, during operation, consume transient memory 104A, 104B within VM X 102, represented in FIG. 1 as apps 116A, 116B (e.g., "user space"). The OS of a given VM 102, 120A, 120B may be referenced interchangeably herein as either the OS 112A, 112B, 122A, 122B, or the OS 144, as they represent the operating system of some VM in some respect (e.g., as consuming transient memory 104A, 104B, having active processes, and the like during execution or runtime, or as consuming persistent memory within a filesystem of the virtual disk 142). The OS 112A, 112B, 122A, 122B running on each VM 102, 120A, 120B may be a version of MICROSOFT WINDOWS, LINUX or some particular flavour of Unix, Android OS, MacOS, iOS, or any other operating system that can support the systems and methods described herein.

The virtual disk 142 also stores a guest agent 148. This guest agent 148 includes files (e.g., binaries, configuration files, log files, and the like) that are used to perform the data protection methods described herein. The guest agent 148, represented here as guest agent 114A, 114B, includes binaries that, during operation, cause the VM X 102 to consume transient memory 104A, 104B. In one example, the guest agent 148 is a thin agent (e.g., a "guest introspection agent") for a malware prevention service (MPS) that is configured to provide malware detection and remediation services on VM X 102 during operation (e.g., when booting, executing, and shutting down on one of the guest VMs, trapping viruses, spyware, Trojans, or other malicious software). The MPS may also include a host agent 124A, 124B configured to communicate with the guest agent(s) 114A, 114B running on VM X 102 and other guest VMs. In this example, the host agent 124A is configured to execute on a service VM 120A. In other examples, the host agent 124A may be executed on the underlying virtualization platform 136A, 136B of the host device 130A, 130B, or on another server computing device (not shown). In some examples, the guest agent 114A, 114B may be a stand-alone MPS (e.g., not utilizing a host agent 124A, 124B). The guest agent 114A, 114B may be referenced interchangeably herein as either the guest agent 114A, 114B, or the guest agent 148, as both represent the guest agent in some respect (e.g., as consuming transient memory, having active processes, and the like during execution or runtime, or as consuming persistent memory within a filesystem of the virtual disk 142).

During operation, the guest agent 114A has some data in transient memory of VM X 102 while executing on the source host device 130A. This data, referred to herein as protected data 118, represents data that is the subject of the protective methods provided by this architecture 100. In other words, the protected data 118 is some particular data of the VM X 102, initially stored in transient memory 104A on source host device 130A, that both needs to be recovered in VM X 102 after a restart or a migration, and also needs to be protected from certain types of malicious exposures during movement and handling of the data.

In MPS examples, this protected data 118 is configuration information associated with the VM X 102 and its guest agent 114A, and can include, for example, networking information of the host agent 124A, 124B (e.g., IP addresses, host names), authentication credentials, monitoring configuration settings (e.g., rules, thresholds, alert and notification settings, data collection and transmission settings, policies used to protect the VM, or the like), and agent updates (e.g., virus profiles, security threat signatures, security patches, bug fixes).

In some examples, referred to herein as "proxy service examples," protected data 118 is provided by another source separate from the guest agent 114A, such as a user-space application (e.g., app 116A), or a service or process of the OS 112A executing on VM X 102. In such proxy service examples, the protected data 118 can be any type of data that could benefit from the security features provided by the methods described herein. For example, and like the MPS configuration information of the MPS examples, a user-space app 116A may similarly store sensitive information such as authentication information (e.g., passwords), encryption information (e.g., private keys, digital signatures, hash values), or the like. In such embodiments, the guest agent 114A provides an application programming interface (API) 115 or other communications method that allows the app 116A to provide the protected data 118 to the guest agent 114A (e.g., during shutdown of the app 116A on the source host device 130A), and likewise to request the protected data 118 from the guest agent 114B (e.g., during startup of the app 116B on the target host device 130B). As a part of an API protocol for receiving protected data 118 from the app 116A via the API 115, the VM X 102 allocates additional transient memory 104A for storage of the protected data 118 that is received from the app 116A. During startup of VM *X* 102 on the target host device 130B, the VM *X* 102 identifies the presence of protected data 118 on the virtual disk 142, allocates transient memory in the target VM X 102 for storing the protected data 118, and awaits a request from the app 116B before providing the protected data 118 to the app 116B and deallocating the transient memory. This proxy service can be provided in lieu of, or in addition to, the MPS protection examples described above.

The example shown in FIG. 1 uses shared storage 140 that hosts a virtual disk 142 for storing the protected data 118 in persistent memory, and some of the examples describe VM X 102 migrating from the source host device 130A to the target host device 130A. This shared storage 140 is visible and accessible to both the source host device 130A and the target host device 130B, and is thus "shared." In other examples, the techniques described herein may use non-shared storage in lieu of shared storage 140 (e.g., "local" storage, storage that is not necessarily visible by both host devices 130A, 130B), and may utilize data copy operations to move data between host devices 130A, 130B during migration examples. For example, each host device 130A, 130B may have their own attached local storage. Before the shutdown of VM X 102 on source host device 130A, the local storage of the source host device 130A stores the virtual disk 142 and thus the protected data 118 (e.g., during shutdown). Once VM X 102 is shut down on the source host device 130A, the contents of the virtual disk 142 are copied from the local storage of host device 130A to local storage of host device 130B (e.g., as an "offline" copy operation). After this copy operation is complete, the target host device 130B thus has a copy of the virtual disk 142 (and thus the protected data 118) and uses that local copy of the virtual disk 142 to start up VM X 102 on the target host device 130B.

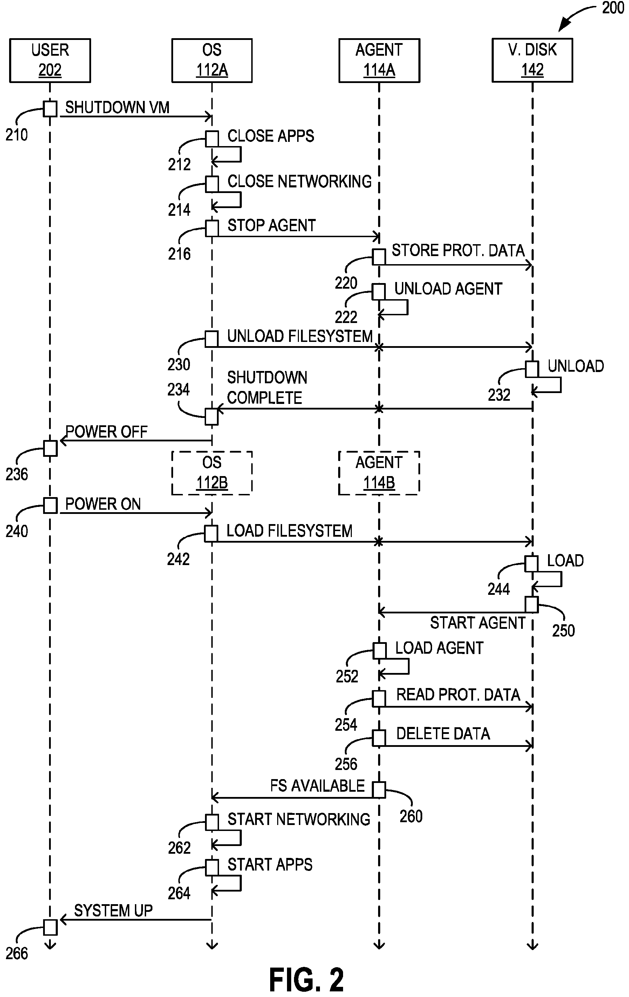

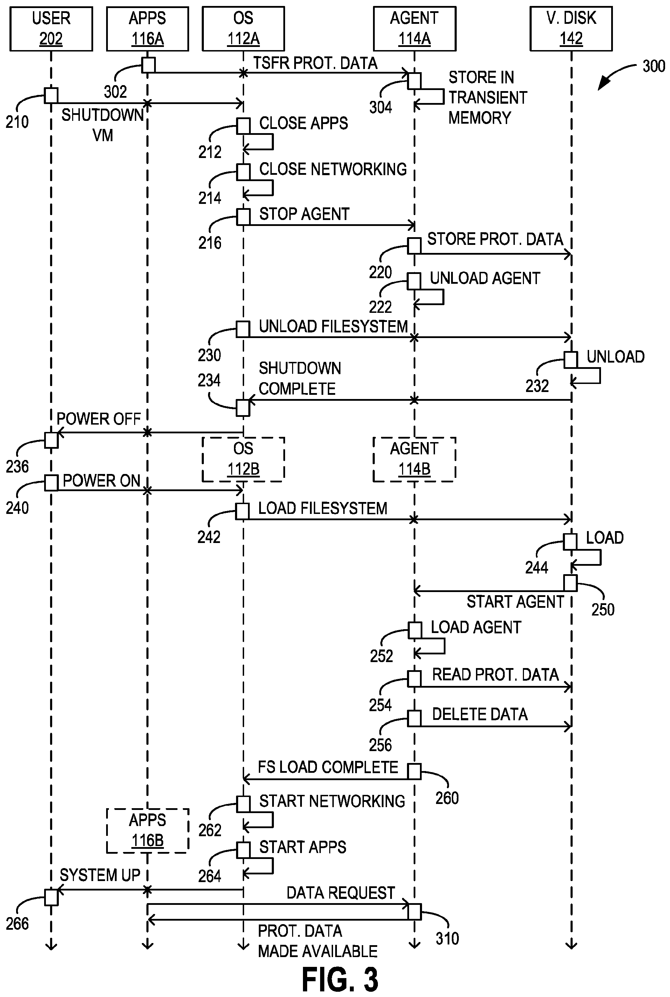

FIG. 2 and FIG. 3 are sequence diagrams illustrating processes 200, 300 for preserving protected data 118 from transient memory 104A between a reboot or migration of VM X 102 shown in FIG. 1. FIG. 2 illustrates an MPS protection example in which the protected data 118 is malware configuration data initially stored in transient memory 104A and preserved through a reboot or migration of VM X 102. FIG. 3 illustrates a proxy service example in which the protected data 118 is provided by an app 116A and is stored initially in transient memory 104A and preserved through a reboot or migration of VM X 102. FIG. 3 contains many of the same operations shown in FIG. 2, but also includes several operations performed by the submitting app 116A. In these examples, the processes 200, 300 are described as being performed by components of the architecture 100. In other examples, the processes 200, 300 may be performed in other architectures, such as in a single server architecture (e.g., in a non-virtualized server, reboot event, or the like).

Referring now to FIG. 2 and FIG. 3, initially, VM X 102 is running on the source host device 130A and has the protected data 118 in transient memory 104A. As discussed above, the protected data 118 may be data native to the guest agent 114A, as in the MPS example, or the protected data 118 may be received from another source, as in the proxy service example. At 210, the VM X 102 experiences a shutdown event. In some situations, this shutdown event is a graceful shutdown event, such as during a planned reboot (e.g., as part of a patch maintenance procedure) or a migration of VM X 102 to another host device 130B (e.g., initiated by a user 202). In other situations, this shutdown event may be a ungraceful shutdown event, such as in a power outage to the underlying host device 130A, 130B, a kernel panic, a system freeze, a hardware failure, or some other critical system error of the underlying OS.

In graceful shutdown events, the OS 112A of VM X 102 performs a sequence of shutdown steps as a part of an overall shutdown process. In these examples, and as is typical of many types of operating systems, the OS 112A performs a shutdown sequence that includes shutting down apps 116A (e.g., user-space applications) first, as at 212, then proceeding to shut down kernel-space processes and services of the OS 112A, such as closing networking at 214, unloading filesystems 230, and the like.

The closing of apps at 212 includes the OS 112A sending graceful shutdown commands to certain processes such as user-space apps 116A at 212 (e.g., allowing those applications to perform their own graceful application shutdown steps, such as saving data, closing files, terminating subprocesses, or other such cleanup operations). For example, under certain versions of Windows, the OS 112A sends a WM_ENDSESSION message to a main window of a given app 116A which causes the app 116A to perform its own shutdown steps. Once the app 116A has completed its own shutdown steps, the application calls an ExitProcess() function that indicates to the OS 112A that the app 116A is ready to be shut down. The OS 112A then sends a WM_DESTROY message to the main window of the app 116A, indicating that it should clean up any remaining resources. Under Linux, the OS 112A sends a SIGTERM signal to the app 116A, which similarly causes the app 116A to perform its own shutdown steps. Once the apps 116A have completed their own shutdown steps at 212, the apps 116A gracefully exit, thus causing the app 116A to be terminated within the OS 112A and clean up any remaining resources. These shutdown steps can be different based on the type of OS 112A, 112B, 122A, 122B running on the VM 102, 120A, 120B, as well as specifically configured or tailored for each particular VM 102. The shutdown of user-space apps 116A may include graceful shutdown or ungraceful termination of user-space processes, as described above.

In proxy service examples, such as shown in FIG. 3, a particular user-space app 116A may initiate transfer of the protected data 118 to the guest agent 114A at 302 (e.g., as a shutdown step of the app 116A during 212, or at some point prior to the shutdown at 210), with the agent 114A storing the protected data 118 in transient memory at 304. The transfer at 302 thus effectively shifts the protected data 118 from transient memory of the app 116A to transient memory of the guest agent 114A, thereby allowing the guest agent 114A to preserve the protected data 118 during its own shutdown process as described below. Performing this user-space shutdown prior to shutdown of the guest agent 114A can help protect against certain types of malware, as some malware operates as user-space processes.

After the apps 116A are closed at 212, the OS 112A closes networking at 214. The OS 112A stops the agent 114A at 216. The guest agent 114A, in this example, is configured to shutdown after the user-space apps 116A are down to ensure that no user-space apps 116A can interfere with I/O operations to be performed by the agent 114A during its shutdown. In some examples, the guest agent 114A is a user-space application, but is configured to be shut down after all other user-space apps 116A are confirmed to be down. In other examples, the guest agent 114A is a kernel-space application (e.g., a driver), and thus is also configured to be shut down after all of the user-space apps 116A are down. When shutting down the guest agent 114A at 216, the OS 112A initiates a graceful shutdown event with the guest agent 114A (e.g., similar to that described above with regard to user-space apps 116A), thereby allowing the guest agent 114A to perform its own cleanup steps, as well as particular steps described herein for preserving the protected data 118.

More specifically, the guest agent 114A identifies the occurrence of a graceful shutdown event, such as through receiving an application shutdown message from the OS 112A (e.g., a WM_ENDSESSION message under Windows, a SIGTERM signal under Linux, or the like, as a part of a graceful shutdown of the OS 112A during a reboot or VM migration) or from another source (e.g., an agent shutdown message from the host agent 124A). In response, the guest agent 114A stores the protected data 118 on the virtual disk 142 at 220 (e.g., via a write operation to an underlying filesystem). In some examples, the protected data 118 is encrypted by the guest agent 114A before writing to the virtual disk 142, by the submitting app 116A before providing the protected data 118 to the guest agent 114A, or both. In some examples, the guest agent 114A creates a digital signature or computes a hash value or checksum of the protected data 118 and store and include this as metadata with the protected data 118. In proxy service examples, metadata for the protected data 118 may include information about the "owner" app 116A associated with the data 118 (e.g., application name, authentication information, or the like) that may be used to verify access to the protected data 118 during restart. As such, the protected data 118 is stored and preserved on the virtual disk 142. Since writing to the virtual disk 142 is performed to preserve the protected data 118, it should be noted that the OS 112A, in this example, is configured to initiate the graceful shutdown of the guest agent 114A at 216 and unloading the agent at 222 prior to halting or unmounting the filesystem of the virtual disk 142 at 230, 232, or otherwise retains operational access to the virtual disk 142 for a write operation (e.g., in case of examples using a raw write to the device without a filesystem).

In some examples, the guest agent 114A may, additionally or alternatively, transmit the protected data 118 to the host agent 124A for recordation and preservation, or trigger a kernel driver of the OS 112A to store the protected data 118 in transient memory of the kernel. For example, in the case of a restart of the guest agent 114A (e.g., without a reboot of the VM X 102), the guest agent 114A may transmit the protected data 118 to the host agent 124A during shutdown, and the host agent 124A can store the protected data 118 in its own transient memory or within persistent memory on the service VM 120A (which may be considered more secure than persistent memory of the VM X 102, as only service applications may be executed on that service VM 120A). In some examples, the guest agent 114A reads a protection cookie from a registry key or encrypted secure location and stores it in kernel memory. Since transient memory is typically deallocated for processes when they are shut down and restarted, and since it may be more secure to not rely on writing to persistent storage while some user-space processes may still be up and running, the transmission to the host agent 124A avoids writing the protected data 118 to the virtual disk 142. On restart of the guest agent 114A, the guest agent 114A can request and receive the protected data 118 from the host agent 124A (or from the local kernel of the OS 112A, via an input/output control (IOCTL) request to the driver to query the persisted data) and place that protected data 118 back into transient memory of the guest agent 114A.

After the unload of the agent 114A is complete, the OS 112A unloads filesystems at 230, 232, as well as other such system processes and services, and completes the shutdown of the OS 112A at 234, powering off the VM at 236.

In reboot examples, the OS 112A and agent 114A participate in bringing up VM X 102 on the same source host device 130A. In migration examples, and as described below, the OS 112B and agent 114B participate in bringing up VM X 102 on a different host device, such as the target host device 130B. Upon startup of VM X 102, the guest agent 114B recovers the protected data 118 during a startup process. In the example shown in FIG. 1, VM X 102 is moved to a different compute node, namely to the target host device 130B (e.g., as part of a VM migration event, such as for performance load balancing across compute nodes). In other examples, VM X 102 is restarted on the same source host device 130A (e.g., as in a reboot or restart event for the VM X 102).

Startup of VM X 102 is initiated with a power on event at 240. After loading the filesystems at 242, the OS 112B is configured to start up the guest agent 114B at 250 after the virtual disk 142 is available to VM X 102 (e.g., after loading the filesystem that stores the protected data 118 at 242, 244 or otherwise after establishing access to the virtual disk 142), and prior to the startup of any user-space apps 116B at 264. In some examples, any or all of the kernel-space processes and services are started before the guest agent 114B is started. In some examples, the OS 112B is configured to wait until after the startup of the guest agent 114B completes before initiating startup of any user-space apps 116B. The startup of disk drivers and mounting of file systems may be built into the kernel, and thus the kernel boot sequence addresses loading all of the modules/drivers before the guest agent 114B is started and begins malware operation. Disk drivers and file system mounting may be built as a loadable module, and thus the filesystem and framework to load drivers (e.g., the filter driver, under Windows) are started prior to startup of the guest agent 114B.

In some examples, such as under certain Windows operating systems, the OS 112B may provide an early launch security feature for malware service applications. For example, some versions of Windows (e.g., Windows 8 and later) provide an Early Launch Anti-Malware (ELAM) feature that allows trusted antivirus or anti-malware software to load and start before other third-party drivers and software during system boot-up. Such a feature ensures that critical security software is loaded and operational before any potential malicious code can execute. Here, the guest agent 114B may be configured as such a service, both to establish malware protections early in the boot process, but also to recover the protected data 118 into transient memory before potential malicious code can execute.

During startup of the guest agent 114B at 252, the guest agent 114B allocates transient memory 104B and reads the protected data 118 from the virtual disk 142 at 254, storing the protected data 118 in transient memory 104B. In encryption examples, the guest agent 114B decrypts the protected data 118 during this data recovery process, confirms digital signature or hash value, or the like. After the protected data 118 is confirmed and preserved in transient memory 104B, the guest agent 114B deletes the data 118 from the virtual disk 142 at 256.

As such, at this stage, the protected data 118 has been recovered from persistent memory of the virtual disk 142 into transient memory 104B on the target VM X 102. In MPS examples, the protected data 118 includes configuration information for malware prevention services and, as such, the guest agent 114B uses this configuration information during startup of its malware services, and the OS 112B may restrain startup of the user-space apps 116B until the malware services of the agent 114B are active (e.g., continuing the startup process of the VM only after the guest agent 114B completes its startup process). After the agent 114B is loaded, the OS 112B can continue to bring up the rest of the VM X 102, including making the filesystems available to other applications at 260 (e.g., user-space apps 116B), starting networking and other OS processes and services at 262, and starting the user-space apps 116B at 264. VM X 102 is up and fully operational at 266.

In proxy service examples, the guest agent 114B awaits an API request from the "owner" user-space apps 116B at 310 and responds to those API requests as they are received (e.g., providing the protected data 118 after successfully authenticating the requesting app 116B and deallocating transient memory 104A used by that protected data segment).

In some examples (e.g., MPS examples), after the guest agent 114B starts, the guest agent 114B transmits the malware agent configuration information that was recovered from the protected data 118 to the host agent 124B running on the service VM 120B. This host agent 124B stores configuration information for all of the guest agents 114B and associated VMs 102 that it manages. During later reboots or restarts of those managed VMs, the host agent 124B may transmit that configuration information to the guest agents 114B.

In some examples, the guest agent 114A may be restarted while VM X 102 stays up (e.g., as in a software upgrade, crash, restart, or the like). Since transient memory typically gets deallocated when a process such as the guest agent 114A is shut down, the protected data 118 is preserved by transmitting the protected data 118 to the host agent 124A before the agent 114A is shut down. Upon restart, the agent 114A reallocates transient memory for the protected data 118 and reacquires the protected data 118 from the host agent 124A. As such, the agent 114A avoids writing data to the virtual disk 142 while the apps 116A are still up and operational, using a secure transfer to the host agent 114A in lieu of a write to the virtual disk 142.

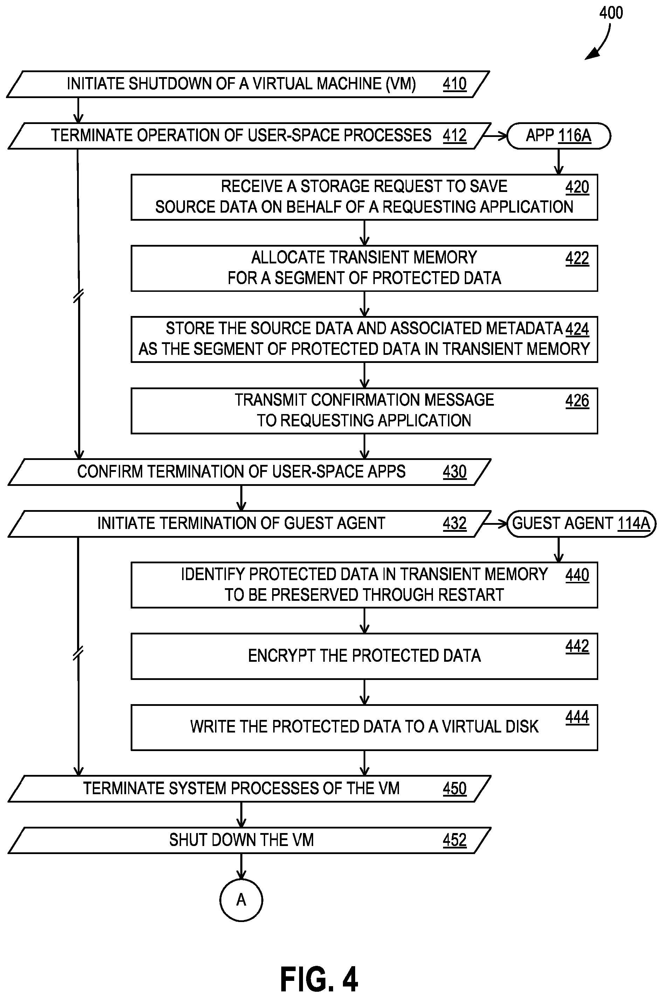

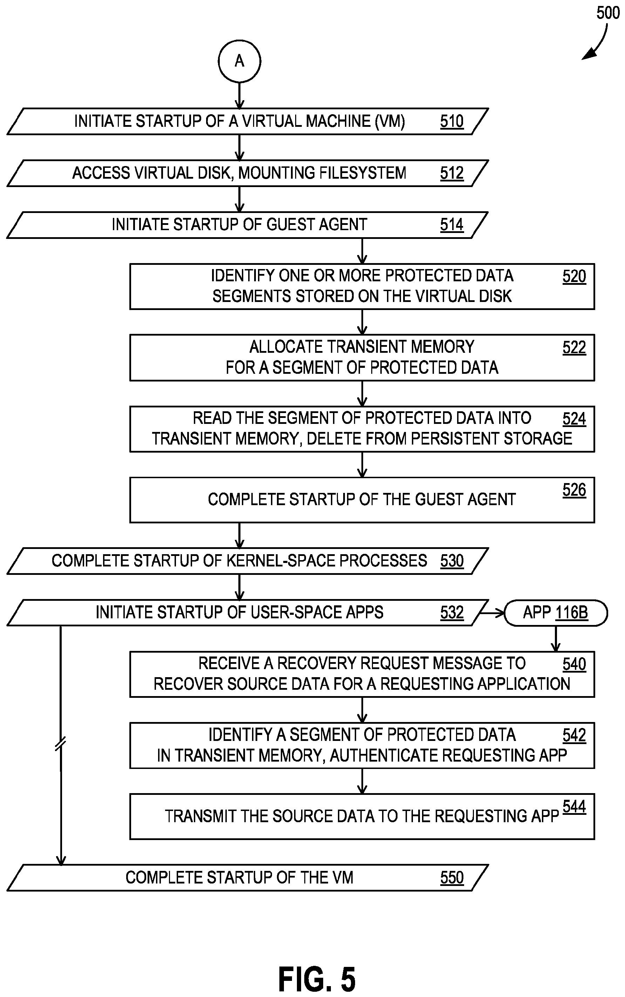

In FIG. 4 and FIG. 5, example flowcharts 400, 500 are provided that illustrate example operations performed on the VM X 102 within architecture 100 of FIG. 1. More specifically, FIG. 4 illustrates example operations performed as VM X 102 is shut down and FIG. 5 illustrates example operations performed as VM X 102 is started up. For purposes of illustration, these operations are described as part of a graceful shutdown and migration of the VM X 102 when moving from the source host device 130A to the target host device 130B. In some examples, the operations of flowcharts 400, 500 are performed by one or more computing apparatus 718 of FIG. 7. Some operations shown in FIG. 4 and FIG. 5 are performed by the guest agent 114A, 114B and some operations are performed by the underlying operating system, OS 112A, 112B. These distinctions are illustrated in FIG. 4 and FIG. 5 by showing operations performed by the OS 112A, 112B as left justified and in parallelograms in the figures, and by showing operations performed by the guest agent 114A, 114B as right justified and in rectangles in the figures, relatively. Further, some operations performed by the apps 116A, 116B are not expressly shown in these figures, but are either expressly described or otherwise implied by this disclosure.

FIG. 4 illustrates a flowchart 400 of exemplary operations associated with shutting down the VM X 102 in the architecture 100 of FIG. 1. Flowchart 400 commences with initiating a shutdown of VM X 102 on the source host device 130A at operation 410. This graceful shutdown can be initiated by any known methods, such as a user-initiated shutdown (e.g., a command-line or administrative shutdown or reboot), a VM-initiated shutdown (e.g., as part of completion of a system patch or software installation), or, as in this example, as part of a migration event to move VM X 102 to another compute node. This shutdown initiation triggers the OS 112A to perform a sequence of shutdown operations. While this sequence of shutdown operations varies between types and versions of operating systems, each of which can be further configured or tailored distinctly on different VMs 102, in these examples, it is presumed that the OS 112A performs a shutdown of user-space applications first, then moves on to shut down kernel-space processes and services in a predefined order (e.g., leaving the kernel-space processes/services active and operating until all user-space applications are down, so as to allow the most graceful shutdowns of the user-space applications as possible). In some examples, the guest agent 114A, 114B operates as a user-space application but is configured to be stopped after all of the other user-space apps 116A are shut down. In other examples, the guest agent 114A, 114B operates as a kernel-space application and is configured to be shut down amongst the other kernel-space processes and services of the OS 112A (e.g., prior to at least the unmounting of the virtual disk 142 and any other kernel-space service needed to perform the methods described herein).

In operation 412, the OS 112A terminates operation of user-space processes (e.g., user-space apps 116A). In the example, and as is common in many types of operating systems, the OS 112A sends a shutdown message to a parent process for each app 116A that causes that app 116A to perform graceful shutdown operations according to its own programming and configuration (e.g., sending a WM_QUERYENDSESSION or WM_ENDSESSION to a main window of the app under Windows, sending a SIGTERM signal to a process or a parent process under Linux, or the like). These app shutdown messages allow the apps 116A to perform graceful shutdown operations of their own, allowing the apps to write data, save files, terminate their own sub-processes, or the like.

In proxy service examples, during an app shutdown process, an app 116A may initiate a request to the guest agent 114A for storage of some sensitive data before its own transient memory is deallocated and the data is lost. The app 116A may, for example, transmit a storage request message to the API 115 of the agent 114A, and the message includes the "source data" of the app 116A that is to be preserved, as well as any additional data used to store and recover the data, such as authentication information that can be used to verify the data and/or the app 116A, the size of the source data, or the like. In some examples, the app 116A encrypts the source data prior to transmission to the agent 114A.

Operations 420-426 illustrate operations performed by the guest agent 114A in such proxy service examples. More specifically, at operation 420, the agent 114A receives the storage request message from the requesting app 116A. At operation 422, the agent 114A identifies a storage size needed to hold the source data, as well as any metadata associated with this request, and allocates transient memory for a new segment of protected data 118. At operation 424, the agent 114A stores the source data and associated metadata as the segment of protected data 118 in transient memory. In some examples, the agent 114A encrypts the source data before this storing. At operation 426, the agent 114A transmits a confirmation message to the requesting app 116A confirming that the data has been secured for storage, thus allowing the requesting app 116A to continue processing its own shutdown sequence. The agent 114A may process several such storage request messages (e.g., multiple requests from the same app 116A, other requests from additional apps 116A), and thus may perform operations 420-426 several times.

At operation 430, the OS 112A confirms termination of all user-space apps 116A (excluding the guest agent 114A, in examples where the guest agent 114A runs in user space). This operation 430 may include receiving final termination confirmation messages from the apps 116A, sending a final termination message to a parent process or window of the apps 116A (e.g., WM_DESTORY message in Windows), cleaning up memory or processes used by the apps 116A or the like. In cases where some apps 116A have not completed graceful shutdown (e.g., after a predetermined amount of time), the OS 112A may ungracefully (e.g., forcibly) terminate those apps 116A (e.g., sending a SIGKILL signal to the parent process under Linux or other Unix operating systems, or the like in other operating systems).

After all user-space apps 116A are confirmed to be stopped, the OS 112A initiates termination of the guest agent 114A at operation 432 (e.g., similar to the other user-space apps 116A, via sending a WM_QUERYENDSESSION or WM_ENDSESSION to a main window of the app under Windows, sending a SIGTERM signal to a parent process under Linux, or the like).

Operations 440-444 illustrate operations performed by the guest agent 114A to gracefully shut down and store segments of protected data 118. More specifically, at operation 440, the agent 114A identifies one or more segments of protected data 118 in transient memory that is to be preserved through this shutdown and restart. In MPS examples, the agent 114A creates one or more segments of protected data 118 specifically containing MPS configuration information for the malware services performed by the guest agent 114A. In proxy service examples, the agent 114A has already received one or more segments of protected data 118 from user-space apps 116A and thus includes these segments of protected data 118 in the following storage operations. At operation 442, the guest agent 114A may encrypt any or all of the segments of protected data 118. At operation 444, the guest agent 114A writes the segment(s) of protected data to the virtual disk 142. In some examples, one or more files are created for each segment of protected data 118 and written to a filesystem on the virtual disk 142 (e.g., using file I/O operations native to the OS 112A and associated filesystem). In other examples, the segments of protected data 118 is written to the virtual disk 142 with raw I/O operations (e.g., where no filesystem is present on the virtual disk 142). As such, operations 440-444 may be performed multiple times, based on how many segments of protected data 118 are to be stored.

Once the guest agent 114A has completed a graceful shutdown and has stored the protected data 118 to the virtual disk 142, the OS 112A completes the remainder of the shutdown process for the operating system at operation 450 and the shutdown of the VM X 102 is finally concluded at operation 452.

FIG. 5 illustrates a flowchart 500 of exemplary operations associated with starting VM X 102 in the architecture 100 of FIG. 1. In this example, VM X 102 is started of a different compute node, namely target host device 130B (e.g., as with a VM migration event moving VM X 102 for performance or other such considerations). In other examples, VM X 102 is restarted on the same source host device 130A (e.g., as in a restart/reboot of VM X 102). In the VM migration event, and while not shown here, it is presumed that other underlying operations may be performed by the host devices 130A, 130B and their virtualization platforms 136A, 136B to allow VM X 102 to be migrated.

Flowchart 500 commences with initiating a startup of VM X 102 on the target host device 130B at operation 510. This startup can be initiated by any known methods, such as a user-initiated startup (e.g., a command-line or administrative command via the virtualization platform 136A or 136B), a VM-initiated startup (e.g., automatically as part of a reboot), or, as in this example, as part of a migration event to move VM X 102 to the target host device 130B. This startup initiation triggers the OS 112B to boot within the VM X 102, which includes performing a sequence of startup operations. While this sequence of startup operations varies between types and versions of operating systems, each of which can be further configured or tailored distinctly on different VMs 102, in these examples, it is presumed that the OS 112B performs a startup of kernel-space processes and services in a predefined order before starting up user-space applications (e.g., ensuring that the kernel-space processes/services are active and operating to support the user-space applications). In some examples, the guest agent 114B is started as a user-space application but is configured to be started before any of the other user-space apps 116B are started. In other examples, the guest agent 114B is started as a kernel-space application and is configured to be started after a minimal set of other kernel-space processes and services of the OS 112B (e.g., after at least the mounting of the virtual disk 142 at operation 512 and any other kernel-space service needed to perform the methods described herein).

In operation 514, the OS 112B initiates the startup of the guest agent 114B. Operations 520-526 illustrate steps performed by the guest agent 114B to recover the protected data 118 from the virtual disk 142 and into transient memory. More specifically, at operation 520, the agent 114B identifies one or more segments of protected data 118 stored on the virtual disk 142. In MPS examples, the virtual disk 142 contains one or more segments of protected data 118 associated with the MPS services provided by the guest agent 114B. In proxy service examples, the virtual disk 142 contains one or more segments of protected data 118 associated with user-space apps 116B. At operation 522, the agent 114B allocates transient memory for each segment of protected data 118. At operation 524, the guest agent 114B reads the segment of protected data 118 from the virtual disk 142 and stores that protected data 118 in the transient memory and deletes the protected data 118 from the virtual disk 142. At operation 526, the agent 114B performs any other startup steps of the guest agent 114B to complete the startup of the guest agent 114B. This may include, for example, decrypting the protected data 118 or, in MPS examples, using the protected data 118 as configuration information for configuring and starting the malware preventions services provided by the guest agent 114B.

At operation 530, the OS 112B completes any other startup of kernel-space services and processes particular to VM X 102 and its particular OS 112B. In some examples, this operation 530 is performed simultaneously with the startup of the guest agent 114B.

At operation 532, the OS 112B initiates startup of the user-space apps 116B. Operations 540-544 illustrate steps performed by the guest agent 114B in proxy service examples. In this example, the proxy service of the agent 114B is configured as a passive API 115, responding to requesting user-space apps 116B when prompted. As an app 116B is starting up, the app 116B initiates a request to the guest agent 114B for recovery of protected data 118. The app 116B may, for example, transmit a recovery request message to the API 115 of the agent 114B requesting recovery of the source data of that app 116B. This request may include identifying information such as a name or other identifier of the app, authentication information for the app, or the like. As such, at operation 540, the agent 114B receives the recovery request message to recover protected data 118 from the requesting app 116B. At operation 542, the agent 114B identifies the particular segment of protected data 118 associated with the requesting app 116B, which is within transient memory at this stage. The agent 114B may also authenticate this request from the app 116B. At operation 544, the source data of the segment is transmitted to the requesting app 116B, which then allows the requesting app 116B to allocate transient memory for the protected data 118 or otherwise store or use that data.

As such, the operations 540-544 may be performed several times as other user-space apps 116B request the recovery of their data. At operation 550, the startup of VM X 102 is complete.

Examples of architecture 100 are operable with virtualized and non-virtualized storage solutions. FIG. 6 illustrates a virtualization architecture 600 that may be used as a version of computing platform. Virtualization architecture 600 is comprised of a set of compute nodes 621-623, interconnected with each other and a set of storage nodes 641-643 according to an embodiment. In other examples, a different number of compute nodes and storage nodes may be used. Each compute node hosts multiple objects, which may be virtual machines (VMs, such as base objects, linked clones, and independent clones), containers, applications, or any compute entity (e.g., computing instance or virtualized computing instance) that consumes storage, such as local storage 661, 662, 663 (e.g., storage devices directly attached to the compute nodes 621, 622, 623) or storage provided by other devices or services (e.g., SAN storage, network-attached storage (NAS), cloud storage, storage provided by storage nodes 641, 642, 643, or the like). When objects are created, they may be designated as global or local, and the designation is stored in an attribute. For example, compute node 621 hosts objects 601, 602, and 603; compute node 622 hosts objects 604, 605, and 606; and compute node 623 hosts objects 607 and 608. Some of objects 601-608 may be local objects. In some examples, a single compute node may host 50, 100, or a different number of objects. Each object uses a VM disk (VMDK), for example VMDKs 611-618 for each of objects 601-608, respectively. Other implementations using different formats are also possible. A virtualization platform 630, which includes hypervisor functionality at one or more of compute nodes 621, 622, and 623, manages objects 601-608. In some examples, various components of virtualization architecture 600, for example compute nodes 621, 622, and 623, and storage nodes 641, 642, and 643 are implemented using one or more computing apparatus such as computing apparatus 718 of FIG. 7.

Virtualization software that provides software-defined storage (SDS), by pooling storage nodes across a cluster, creates a distributed, shared data store, for example a storage area network (SAN). Thus, objects 601-608 may be virtual SAN (vSAN) objects. In some distributed arrangements, servers are distinguished as compute nodes (e.g., compute nodes 621, 622, and 623) and storage nodes (e.g., storage nodes 641, 642, and 643). Although a storage node may attach a large number of storage devices (e.g., flash, solid state drives (SSDs), non-volatile memory express (NVMe), Persistent Memory (PMEM), quad-level cell (QLC)) processing power may be limited beyond the ability to handle input/output (I/O) traffic. Storage nodes 641-643 each include multiple physical storage components, which may include flash, SSD, NVMe, PMEM, and QLC storage solutions. For example, storage node 641 has storage 651, 652, 653, and 654; storage node 642 has storage 655 and 656; and storage node 643 has storage 657 and 658. In some examples, a single storage node may include a different number of physical storage components.

In the described examples, storage nodes 641-643 are treated as a SAN with a single global object, enabling any of objects 601-608 to write to and read from any of storage 651-658 using a virtual SAN component 632. Virtual SAN component 632 executes in compute nodes 621-623. Using the disclosure, compute nodes 621-623 are able to operate with a wide range of storage options. In some examples, compute nodes 621-623 each include a manifestation of virtualization platform 630 and virtual SAN component 632. Virtualization platform 630 manages the generating, operations, and clean-up of objects 601 and 602. Virtual SAN component 632 permits objects 601 and 602 to write incoming data from object 601 and incoming data from object 602 to storage nodes 641, 642, and/or 643, in part, by virtualizing the physical storage components of the storage nodes.

### Additional Examples

An example method of persisting transient data between virtual machine restarts comprises: terminating, by a first virtual machine (VM) during a shutdown process for the first VM, execution of user-space processes on the first VM; writing, by a first agent executing on the first VM, protected data from transient memory of the first VM to a virtual disk accessible by the first VM; shutting down the first VM; initiating a startup process of a second VM, the second VM mounting the virtual disk; and executing, at the second VM and prior to execution of user-space processes, a second agent, the second agent being configured to: read the protected data from the virtual disk into transient memory of the second VM; and delete the protected data from the virtual disk.

An example computer system comprises at least one compute node, each compute node of the at least one compute node comprises: a transient memory device providing transient memory for one or more virtual machines (VMs); at least one processor; and a non-transitory computer readable medium having stored thereon program code executable by the at least one processor, the program code causing the at least one processor to: terminate, by a first virtual machine (VM) during a shutdown process for the first VM, execution of user-space processes on the first VM; write, by a first agent executing on the first VM, protected data from transient memory of the first VM to a virtual disk accessible by the first VM; shut down the first VM; initiate a startup process of a second VM, the second VM having access to the virtual disk; and execute, at the second VM and prior to execution of user-space processes, a second agent, the second agent being configured to: read the protected data from the virtual disk into transient memory of the second VM; and delete the protected data from the virtual disk.

An example non-transitory computer storage medium has stored thereon program code executable by a processor, the program code embodying a program code method comprising: terminating, by a first virtual machine (VM) during a shutdown process for the first VM, execution of user-space processes on the first VM; writing, by a first agent executing on the first VM, protected data from transient memory of the first VM to a virtual disk accessible by the first VM; shutting down the first VM; initiating a startup process of a second VM, the second VM having access to the virtual disk; and executing, at the second VM and prior to execution of user-space processes, a second agent, the second agent being configured to: read the protected data from the virtual disk into transient memory of the second VM; and delete the protected data from the virtual disk.

An example computer system comprises a first compute node and a second compute node, each of the first and second compute nodes comprises: a transient memory device providing transient memory for one or more virtual machines (VMs); at least one processor; and a non-transitory computer readable medium having stored thereon program code executable by the at least one processor, the program code causing the at least one processor to: terminate, by a first virtual machine (VM) during a shutdown process for the first VM while running on the first compute node, execution of user-space processes on the first VM; write, by a first agent executing on the first VM, protected data from transient memory of the first VM to a virtual disk accessible by the first VM; shut down the first VM on the first compute node; initiate a startup process of a second VM on the second compute node, the second VM having access to the virtual disk; and execute, at the second VM and prior to execution of user-space processes, a second agent, the second agent being configured to: read the protected data from the virtual disk into transient memory of the second VM; and delete the protected data from the virtual disk.

Another example computer system comprises: a processor; and a non-transitory computer readable medium having stored thereon program code executable by the processor, the program code causing the processor to perform a method disclosed herein. Another example non-transitory computer storage medium has stored thereon program code executable by a processor, the program code embodying a method disclosed herein.

Alternatively, or in addition to the other examples described herein, examples include any combination of the following:
- terminating, by a virtual machine (VM) during a shutdown process for the first VM, execution of user-space processes on the first VM;
- writing, by an agent executing on the first VM, protected data from transient memory of the first VM to a virtual disk accessible by the first VM;
- shutting down the first VM;
- initiating a startup process of a second VM, the second VM mounting the virtual disk;
- executing, at the second VM and prior to execution of user-space processes, a second agent, the second agent being configured to: read the protected data from the first file on the filesystem into transient memory of the second VM; and delete the first file from the virtual disk;
- reading protected data from transient memory;
- copying protected data from transient memory to persistent memory;
- copying protected data to persistent memory after user-space applications have been stopped;
- copying protected data from persistent memory before user-space applications have been started;
- an agent is a process or a driver;
- a virtual machine executes an operating system that includes one of Windows, Linux, any flavor of Unix, Android OS, iOS, MacOS;
- gracefully terminating user-space processes, applications, or agents;
- forcefully terminating user-space processes, applications, or agents;
- agents implement malware services on VMs;
- protected data includes configuration information associated with the malware services;
- agents use configuration information to configure at least one aspect of the malware services;
- receiving, by an agent, a storage request message from a user-space application executing on the first VM;
- a storage request message representing a request for the first agent to store the protected data;
- a storage request message including the protected data;
- allocating a segment of transient memory by the first agent on the first VM;
- storing the protected data in the segment of transient memory;
- receiving, by a VM, a recovery request message from a user-space application executing on a VM;
- a recovery request message representing a request for the second agent to provide the protected data to the user-space application;
- transmitting the protected data from the second agent to the user-space application in response to the recovery request message;
- a first VM is shut down on a first compute node, a second VM is started on a second compute node different than the first compute node, a shutdown process on the first VM and a startup process on the second VM are part of a virtual machine migration of a particular virtual machine between the first and second compute nodes;
- a shutdown process on the first VM and a startup process on the second VM are part of a reboot process of a particular virtual machine on a single compute node.
- writing of protected data on a VM is performed after the user-space processes are terminated;
- reading of protected data on a VM is performed before user-space processes are started;
- agent executes in kernel space;
- agent executes in user space;
- terminating user-space processes includes user-space processes performing graceful shutdowns;
- terminating user-space processes includes forcibly terminating user-space processes;
- writing and reading protected data via raw disk I/O operations;
- writing and reading protected data via filesystem I/O operations;
- agents dynamically allocating transient memory;
- encrypting and decrypting protected data by user-space processes;
- encrypting and decrypting protected data by agents;
- confirming termination of user-space applications;
- delaying startup of user-space applications until startup of agent is complete;
- terminating system processes of an operating system; and
- starting system processes of an operating system.

### Exemplary Operating Environment

The present disclosure is operable with a computing device (computing apparatus) according to an embodiment shown as a functional block diagram 700 in FIG. 7. FIG. 7 illustrates a block diagram of an example computing apparatus that may be used as a component of the architectures of FIG. 1 and FIG. 6. In an embodiment, components of a computing apparatus 718 are implemented as part of an electronic device according to one or more embodiments described in this specification. The computing apparatus 718 comprises one or more processors 719 which may be microprocessors, controllers, or any other suitable type of processors for processing computer executable instructions to control the operation of the electronic device. Alternatively, or in addition, the processor 719 is any technology capable of executing logic or instructions, such as a hardcoded machine. Platform software comprising an operating system 720 or any other suitable platform software may be provided on the computing apparatus 718 to enable application software 721 to be executed on the device. According to an embodiment, the operations described herein may be accomplished by software, hardware, and/or firmware.

Computer executable instructions may be provided using any computer-readable medium (e.g., any non-transitory computer storage medium) or media that are accessible by the computing apparatus 718. Computer-readable media may include, for example, computer storage media such as a memory 722 and communications media. Computer storage media, such as a memory 722, include volatile and non-volatile, removable, and non-removable media implemented in any method or technology for storage of information such as computer readable instructions, data structures, program modules or the like. Computer storage media include, but are not limited to, hard disks, RAM, ROM, EPROM, EEPROM, NVMe devices, persistent memory, phase change memory, flash memory or other memory technology, compact disc (CD, CD-ROM), digital versatile disks (DVD) or other optical storage, magnetic cassettes, magnetic tape, magnetic disk storage, shingled disk storage or other magnetic storage devices, or any other non-transmission medium (e., non-transitory) that can be used to store information for access by a computing apparatus. In contrast, communication media may embody computer readable instructions, data structures, program modules, or the like in a modulated data signal, such as a carrier wave, or other transport mechanism. As defined herein, computer storage media do not include communication media. Therefore, a computer storage medium should not be interpreted to be a propagating signal per se. Propagated signals per se are not examples of computer storage media. Although the computer storage medium (the memory 722) is shown within the computing apparatus 718, it will be appreciated by a person skilled in the art, that the storage may be distributed or located remotely and accessed via a network or other communication link (e.g., using a communication interface 723). Computer storage media are tangible, non-transitory, and are mutually exclusive to communication media.

The computing apparatus 718 may comprise an input/output controller 724 configured to output information to one or more output devices 725, for example a display or a speaker, which may be separate from or integral to the electronic device. The input/output controller 724 may also be configured to receive and process an input from one or more input devices 726, for example, a keyboard, a microphone, or a touchpad. In one embodiment, the output device 725 also acts as the input device. An example of such a device may be a touch sensitive display. The input/output controller 724 may also output data to devices other than the output device, e.g., a locally connected printing device. In some embodiments, a user may provide input to the input device(s) 726 and/or receive output from the output device(s) 725.

The functionality described herein can be performed, at least in part, by one or more hardware logic components. According to an embodiment, the computing apparatus 718 is configured by the program code when executed by the processor 719 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

Although described in connection with an exemplary computing system environment, examples of the disclosure are operative with numerous other general purpose or special purpose computing system environments or configurations. Examples of well-known computing systems, environments, and/or configurations that may be suitable for use with aspects of the disclosure include, but are not limited to, mobile computing devices, personal computers, server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices.

Examples of the disclosure may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other examples of the disclosure may include different computer-executable instructions or components having more or less functionality than illustrated and described herein.

Aspects of the disclosure transform a general-purpose computer into a special purpose computing device when programmed to execute the instructions described herein. The detailed description provided above in connection with the appended drawings is intended as a description of a number of embodiments and is not intended to represent the only forms in which the embodiments may be constructed, implemented, or utilized. Although these embodiments may be described and illustrated herein as being implemented in devices such as a server, computing devices, or the like, this is only an exemplary implementation and not a limitation. As those skilled in the art will appreciate, the present embodiments are suitable for application in a variety of different types of computing devices, for example, PCs, servers, laptop computers, tablet computers, etc.

The term "computing device" and the like are used herein to refer to any device with processing capability such that it can execute instructions. Those skilled in the art will realize that such processing capabilities are incorporated into many different devices and therefore the terms "computer", "server", and "computing device" each may include PCs, servers, laptop computers, mobile telephones (including smart phones), tablet computers, and many other devices. Any range or device value given herein may be extended or altered without losing the effect sought, as will be apparent to the skilled person. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

While no personally identifiable information is tracked by aspects of the disclosure, examples may have been described with reference to data monitored and/or collected from the users. In some examples, notice may be provided to the users of the collection of the data (e.g., via a dialog box or preference setting) and users are given the opportunity to give or deny consent for the monitoring and/or collection. The consent may take the form of opt-in consent or opt-out consent.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure. It will be understood that the benefits and advantages described above may relate to one embodiment or may relate to several embodiments. When introducing elements of aspects of the disclosure or the examples thereof, the articles "a," "an," and "the" are intended to mean that there are one or more of the elements. The terms "comprising," "including," and "having" are intended to be inclusive and mean that there may be additional elements other than the listed elements. The term "exemplary" is intended to mean "an example of."

Having described aspects of the disclosure in detail, it will be apparent that modifications and variations are possible without departing from the scope of aspects of the disclosure as defined in the appended claims. As various changes may be made in the above constructions, products, and methods without departing from the scope of aspects of the disclosure, it is intended that all matter contained in the above description and shown in the accompanying drawings shall be interpreted as illustrative and not in a limiting sense.

## Claims

1. A computerized method of securely persisting transient data between virtual machine restarts, the method comprising:
terminating, by a first virtual machine (102), VM, during a shutdown process for the first VM (102), execution of user-space processes on the first VM (102);
writing, by a first agent (114A) executing on the first VM (102) and after user-space processes are terminated on the first VM (102), protected data (118) from transient memory (104A) of the first VM (102) to a virtual disk (142) accessible by the first VM (102);
shutting down the first VM (102);
initiating a startup process of a second VM (102), the second VM (102) mounting the virtual disk (142); and
executing, at the second VM (102) and prior to execution of user-space processes, a second agent (114B), the second agent (114B) being configured to:
read the protected data (118) from the virtual disk (142) into transient memory (104B) of the second VM (102); and
delete the protected data (118) from the virtual disk (142).

2. The computerized method of claim 1, wherein the first agent (114A) and the second agent (114B) implement malware services on the first VM (102) and the second VM (102) respectively, wherein the protected data (118) includes configuration information associated with the malware services, wherein the second agent (114B) uses the configuration information to configure at least one aspect of the malware services.

3. The computerized method of claim 1 or 2, further comprising:
receiving, by the first agent (114A), a storage request message from a user-space application executing on the first VM (102), the storage request message representing a request for the first agent (114A) to store the protected data (118), the storage request message including the protected data (118);
allocating a segment of the transient memory (104A) by the first agent (114A) on the first VM (102); and
storing the protected data (118) in the segment of the transient memory (104A).

4. The computerized method of claim 3, further comprising:
receiving, by the second VM (102), a recovery request message from the user-space application executing on the second VM (102), the recovery request message representing a request for the second agent (114B) to provide the protected data (118) to the user-space application; and
transmitting the protected data (118) from the second agent (114B) to the user-space application in response to the recovery request message.

5. The computerized method of any of claims 1 to 4, comprising at least one of the following features:
wherein the first VM (102) is shut down on a first compute node (621), wherein the second VM (102) is started on a second compute node (622) different than the first compute node (621), wherein the shutdown process on the first VM (102) and the startup process on the second VM (102) are part of a virtual machine migration of a particular virtual machine between the first and second compute nodes (621, 622);
wherein the shutdown process on the first VM (102) and the startup process on the second VM (102) are part of a reboot process of a particular virtual machine on a single compute node;
wherein the writing of the protected data (118) on the first VM (102) is performed after the user-space processes are terminated, wherein the reading of the protected data (118) on the second VM (102) is performed before the user-space processes are started.

6. A computer system comprising at least one compute node, each compute node of the at least one compute node comprising:
a transient memory device providing transient memory (104A) for one or more virtual machines (102), VMs;
at least one processor (719); and
a non-transitory computer readable medium having stored thereon program code executable by the at least one processor (719), the program code causing the at least one processor (719) to:
terminate, by a first virtual machine (102), VM, during a shutdown process for the first VM (102), execution of user-space processes on the first VM (102);
write, by a first agent (114A) executing on the first VM (102) and after user-space processes are terminated on the first VM (102), protected data (118) from transient memory (104A) of the first VM (102) to a virtual disk (142) accessible by the first VM (102);
shut down the first VM (102);
initiate a startup process of a second VM (102), the second VM (102) having access to the virtual disk (142); and
execute, at the second VM (102) and prior to execution of user-space processes, a second agent (114B), the second agent (114B) being configured to:
read the protected data (118) from the virtual disk (142) into transient memory (104B) of the second VM (102); and
delete the protected data (118) from the virtual disk (142).

7. The computer system of claim 6, wherein the first agent (114A) and the second agent (114B) implement malware services on the first VM (102) and the second VM (102) respectively, wherein the protected data (118) includes configuration information associated with the malware services, wherein the second agent (114B) uses the configuration information to configure at least one aspect of the malware services.

8. The computer system of claim 6 or 7, the program code further causing the at least one processor (719) to:
receive, by the first agent (114A), a storage request message from a user-space application executing on the first VM (102), the storage request message representing a request for the first agent (114A) to store the protected data (118), the storage request message including the protected data (118);
allocate a block of the transient memory (104A) by the first agent (114A) on the first VM (102); and
store the protected data (118) in the block of the transient memory (104A).

9. The computer system of claim 8, the program code further causing the at least one processor (719) to:
receive, by the second VM (102), a recovery request message from the user-space application executing on the second VM (102), the recovery request message representing a request for the second agent (114B) to provide the protected data (118) to the user-space application; and
transmit the protected data (118) from the second agent (114B) to the user-space application in response to the recovery request message.

10. The computer system of any of claims 6 to 9, comprising at least one of the following features:
wherein the first VM (102) is shut down on a first compute node (621), wherein the second VM (102) is started on a second compute node (622) different than the first compute node (621), wherein the shutdown process on the first VM (102) and the startup process on the second VM (102) are part of a virtual machine migration of a particular virtual machine between the first and second compute nodes (621, 622);
wherein the shutdown process on the first VM (102) and the startup process on the second VM (102) are part of a reboot process of a particular virtual machine on a single compute node;
wherein the writing of the protected data (118) on the first VM (102) is performed after the user-space processes are terminated, wherein the reading of the protected data (118) on the second VM (102) is performed before the user-space processes are started.

11. A non-transitory computer storage medium having stored thereon program code executable by a processor (719), the program code embodying a program code method comprising:
terminating, by a first virtual machine (102), VM, during a shutdown process for the first VM (102), execution of user-space processes on the first VM (102);
writing, by a first agent (114A) executing on the first VM (102) and after user-space processes are terminated on the first VM (102), protected data (118) from transient memory (104A) of the first VM (102) to a virtual disk (142) accessible by the first VM (102);
shutting down the first VM (102);
initiating a startup process of a second VM (102), the second VM (102) having access to the virtual disk (142); and
executing, at the second VM (102) and prior to execution of user-space processes, a second agent (114B), the second agent (114B) being configured to:
read the protected data (118) from the virtual disk (142) into transient memory (104B) of the second VM (102); and
delete the protected data (118) from the virtual disk (142).

12. The non-transitory computer storage medium of claim 11, wherein the first agent (114A) and the second agent (114B) implement malware services on the first VM (102) and the second VM (102) respectively, wherein the protected data (118) includes configuration information associated with the malware services, wherein the second agent (114B) uses the configuration information to configure at least one aspect of the malware services.

13. The non-transitory computer storage medium of claim 11 or 12, wherein the program code method further comprises:
receiving, by the first agent (114A), a storage request message from a user-space application executing on the first VM (102), the storage request message representing a request for the first agent (114A) to store the protected data (118), the storage request message including the protected data (118);
allocating a block of the transient memory (104A) by the first agent (114A) on the first VM (102); and
storing the protected data (118) in the block of the transient memory (104A).

14. The non-transitory computer storage medium of claim 13, wherein the program code method further comprises:
receiving, by the second VM (102), a recovery request message from a user-space application executing on the second VM (102), the recovery request message representing a request for the second agent (114B) to provide the protected data (118) to the user-space application; and
transmitting the protected data (118) from the second agent (114B) to the user-space application in response to the recovery request message.

15. The non-transitory computer storage medium of any of claims 11 to 14, comprising at least one of the following features:
wherein the first VM (102) is shut down on a first compute node (621), wherein the second VM (102) is started on a second compute node (622) different than the first compute node (621), wherein the shutdown process on the first VM (102) and the startup process on the second VM (102) are part of a virtual machine migration of a particular virtual machine between the first and second compute nodes (621, 622);
wherein the writing of the protected data (118) on the first VM (102) is performed after the user-space processes are terminated, wherein the reading of the protected data (118) on the second VM (102) is performed before the user-space processes are started.

## Patentansprüche

1. Ein computerimplementiertes Verfahren zum sicheren Fortbestehenlassen von transienten Daten zwischen Neustarts von virtuellen Maschinen, wobei das Verfahren aufweist:
Beenden, durch eine erste virtuelle Maschine (102), VM, während eines Abschaltprozesses für die erste VM (102), der Ausführung von Benutzerraumprozessen auf der ersten VM (102);
Schreiben, mittels eines ersten Agenten (114A), der auf der ersten VM (102) ausgeführt wird, und nachdem Benutzerraumprozesse auf der ersten VM (102) beendet sind, von geschützten Daten (118) von einem transienten Speicher (104A) der ersten VM (102) auf eine virtuelle Platte (142), auf die durch die erste VM (102) zugegriffen werden kann;
Abschalten der ersten VM (102);
Initiieren eines Startprozesses einer zweiten VM (102), wobei die zweite VM (102) die virtuelle Platte (142) montiert; und
Ausführen, an der zweiten VM (102) und vor der Ausführung von Benutzerraumprozessen, eines zweiten Agenten (114B), wobei der zweite Agent (114B) konfiguriert ist zum:
Lesen der geschützten Daten (118) von der virtuellen Platte (142) in einen transienten Speicher (104B) der zweiten VM (102); und
Löschen der geschützten Daten (118) von der virtuellen Platte (142).

2. Das computerimplementierte Verfahren nach Anspruch 1, wobei der erste Agent (114A) und der zweite Agent (114B) Malware-Dienste auf der ersten VM (102) bzw. der zweiten VM (102) implementieren, wobei die geschützten Daten (118) Konfigurationsinformationen enthalten, die den Malware-Diensten zugeordnet sind, wobei der zweite Agent (114B) die Konfigurationsinformationen verwendet, um mindestens einen Aspekt der Malware-Dienste zu konfigurieren.

3. Das computerimplementierte Verfahren nach Anspruch 1 oder 2, ferner aufweisend:
Empfangen, mittels des ersten Agenten (114A), einer Speicheranforderungsnachricht von einer Benutzerraumanwendung, die auf der ersten VM (102) ausgeführt wird, wobei die Speicheranforderungsnachricht eine Anforderung für den ersten Agenten (114A) darstellt, die geschützten Daten (118) zu speichern, wobei die Speicheranforderungsnachricht die geschützten Daten (118) enthält;
Zuweisen eines Segments des transienten Speichers (104A) mittels des ersten Agenten (114A) auf der ersten VM (102); und
Speichern der geschützten Daten (118) in dem Segment des transienten Speichers (104A).

4. Das computerimplementierte Verfahren nach Anspruch 3, ferner aufweisend:
Empfangen, mittels der zweiten VM (102), einer Wiederherstellungsanforderungsnachricht von der Benutzerraumanwendung, die auf der zweiten VM (102) ausgeführt wird, wobei die Wiederherstellungsanforderungsnachricht eine Anforderung für den zweiten Agenten (114B) darstellt, die geschützten Daten (118) an die Benutzerraumanwendung bereitzustellen; und
Übertragen der geschützten Daten (118) von dem zweiten Agenten (114B) an die Benutzerraumanwendung als Reaktion auf die Wiederherstellungsanforderungsnachricht.

5. Das computerimplementierte Verfahren nach einem der Ansprüche 1 bis 4, aufweisend mindestens eines der folgenden Merkmale:
wobei die erste VM (102) auf einem ersten Rechenknoten (621) abgeschaltet wird, wobei die zweite VM (102) auf einem zweiten Rechenknoten (622) gestartet wird, der sich von dem ersten Rechenknoten (621) unterscheidet, wobei der Abschaltprozess auf der ersten VM (102) und der Startprozess auf der zweiten VM (102) Teil einer Migration einer virtuellen Maschine einer bestimmten virtuellen Maschine zwischen dem ersten und dem zweiten Rechenknoten (621, 622) sind;
wobei der Abschaltprozess auf der ersten VM (102) und der Startprozess auf der zweiten VM (102) Teil eines Neustartprozesses einer bestimmten virtuellen Maschine auf einem einzelnen Rechenknoten sind;
wobei das Schreiben der geschützten Daten (118) auf die erste VM (102) durchgeführt wird, nachdem die Benutzerraumprozesse beendet sind, wobei das Lesen der geschützten Daten (118) auf der zweiten VM (102) durchgeführt wird, bevor die Benutzerraumprozesse gestartet werden.

6. Ein Computersystem aufweisend mindestens einen Rechenknoten, wobei jeder Rechenknoten des mindestens einen Rechenknotens aufweist:
eine transiente Speichervorrichtung, die einen transienten Speicher (104A) für eine oder mehrere virtuelle Maschinen (102), VMs, bereitstellt;
mindestens einen Prozessor (719); und
ein nicht-transitorisches computerlesbares Medium mit darauf gespeichertem Programmcode, der mittels des mindestens einen Prozessors (719) ausführbar ist, wobei der Programmcode den mindestens einen Prozessor (719) veranlasst zum:
Beenden, mittels einer ersten virtuellen Maschine (102), VM, während eines Abschaltprozesses für die erste VM (102), der Ausführung von Benutzerraumprozessen auf der ersten VM (102);
Schreiben, mittels eines ersten Agenten (114A), der auf der ersten VM (102) ausgeführt wird, und nachdem Benutzerraumprozesse auf der ersten VM (102) beendet sind, von geschützten Daten (118) von einem transienten Speicher (104A) der ersten VM (102) auf eine virtuelle Platte (142), auf die durch die erste VM (102) zugegriffen werden kann;
Abschalten der ersten VM (102);
Initiieren eines Startprozesses einer zweiten VM (102), wobei die zweite VM (102) Zugriff auf die virtuelle Platte (142) hat; und
Ausführen, an der zweiten VM (102) und vor der Ausführung von Benutzerraumprozessen, eines zweiten Agenten (114B), wobei der zweite Agent (114B) konfiguriert ist zum:
Lesen der geschützten Daten (118) von der virtuellen Platte (142) in einen transienten Speicher (104B) der zweiten VM (102); und
Löschen der geschützten Daten (118) von der virtuellen Platte (142).

7. Das Computersystem nach Anspruch 6, wobei der erste Agent (114A) und der zweite Agent (114B) Malware-Dienste auf der ersten VM (102) bzw. der zweiten VM (102) implementieren, wobei die geschützten Daten (118) Konfigurationsinformationen enthalten, die den Malware-Diensten zugeordnet sind, wobei der zweite Agent (114B) die Konfigurationsinformationen verwendet, um mindestens einen Aspekt der Malware-Dienste zu konfigurieren.

8. Das Computersystem nach Anspruch 6 oder 7, wobei der Programmcode ferner den mindestens einen Prozessor (719) veranlasst zum:
Empfangen, mittels des ersten Agenten (114A), einer Speicheranforderungsnachricht von einer Benutzerraumanwendung, die auf der ersten VM (102) ausgeführt wird, wobei die Speicheranforderungsnachricht eine Anforderung für den ersten Agenten (114A) darstellt, die geschützten Daten (118) zu speichern, wobei die Speicheranforderungsnachricht die geschützten Daten (118) enthält;
Zuweisen eines Blocks des transienten Speichers (104A) mittels des ersten Agenten (114A) auf der ersten VM (102); und
Speichern der geschützten Daten (118) in dem Block des transienten Speichers (104A).

9. Das Computersystem nach Anspruch 8, wobei der Programmcode ferner den mindestens einen Prozessor (719) veranlasst zum:
Empfangen, mittels der zweiten VM (102), einer Wiederherstellungsanforderungsnachricht von der Benutzerraumanwendung, die auf der zweiten VM (102) ausgeführt wird, wobei die Wiederherstellungsanforderungsnachricht eine Anforderung für den zweiten Agenten (114B) darstellt, die geschützten Daten (118) an die Benutzerraumanwendung bereitzustellen; und
Übertragen der geschützten Daten (118) von dem zweiten Agenten (114B) an die Benutzerraumanwendung als Reaktion auf die Wiederherstellungsanforderungsnachricht.

10. Das Computersystem nach einem der Ansprüche 6 bis 9, aufweisend mindestens eines der folgenden Merkmale:
wobei die erste VM (102) auf einem ersten Rechenknoten (621) abgeschaltet wird, wobei die zweite VM (102) auf einem zweiten Rechenknoten (622) gestartet wird, der sich von dem ersten Rechenknoten (621) unterscheidet, wobei der Abschaltprozess auf der ersten VM (102) und der Startprozess auf der zweiten VM (102) Teil einer Migration einer virtuellen Maschine einer bestimmten virtuellen Maschine zwischen dem ersten und dem zweiten Rechenknoten (621, 622) sind;
wobei der Abschaltprozess auf der ersten VM (102) und der Startprozess auf der zweiten VM (102) Teil eines Neustartprozesses einer bestimmten virtuellen Maschine auf einem einzelnen Rechenknoten sind;
wobei das Schreiben der geschützten Daten (118) auf die erste VM (102) durchgeführt wird, nachdem die Benutzerraumprozesse beendet sind, wobei das Lesen der geschützten Daten (118) auf der zweiten VM (102) durchgeführt wird, bevor die Benutzerraumprozesse gestartet werden.

11. Ein nicht-transitorisches Computerspeichermedium mit darauf gespeichertem Programmcode, der mittels eines Prozessors (719) ausführbar ist, wobei der Programmcode ein Programmcodeverfahren verkörpert, aufweisend:
Beenden, durch eine erste virtuelle Maschine (102), VM, während eines Abschaltprozesses für die erste VM (102), der Ausführung von Benutzerraumprozessen auf der ersten VM (102);
Schreiben, mittels eines ersten Agenten (114A), der auf der ersten VM (102) ausgeführt wird, und nachdem Benutzerraumprozesse auf der ersten VM (102) beendet sind, von geschützten Daten (118) von einem transienten Speicher (104A) der ersten VM (102) auf eine virtuelle Platte (142), auf die durch die erste VM (102) zugegriffen werden kann;
Abschalten der ersten VM (102);
Initiieren eines Startprozesses einer zweiten VM (102), wobei die zweite VM (102) Zugriff auf die virtuelle Platte (142) hat; und
Ausführen, an der zweiten VM (102) und vor der Ausführung von Benutzerraumprozessen, eines zweiten Agenten (114B), wobei der zweite Agent (114B) konfiguriert ist zum:
Lesen der geschützten Daten (118) von der virtuellen Platte (142) in einen transienten Speicher (104B) der zweiten VM (102); und
Löschen der geschützten Daten (118) von der virtuellen Platte (142).

12. Das nicht-transitorische Computerspeichermedium nach Anspruch 11, wobei der erste Agent (114A) und der zweite Agent (114B) Malware-Dienste auf der ersten VM (102) bzw. der zweiten VM (102) implementieren, wobei die geschützten Daten (118) Konfigurationsinformationen enthalten, die den Malware-Diensten zugeordnet sind, wobei der zweite Agent (114B) die Konfigurationsinformationen verwendet, um mindestens einen Aspekt der Malware-Dienste zu konfigurieren.

13. Das nicht-transitorische Computerspeichermedium nach Anspruch 11 oder 12, wobei das Programmcodeverfahren ferner aufweist:
Empfangen, mittels des ersten Agenten (114A), einer Speicheranforderungsnachricht von einer Benutzerraumanwendung, die auf der ersten VM (102) ausgeführt wird, wobei die Speicheranforderungsnachricht eine Anforderung für den ersten Agenten (114A) darstellt, die geschützten Daten (118) zu speichern, wobei die Speicheranforderungsnachricht die geschützten Daten (118) enthält;
Zuweisen eines Blocks des transienten Speichers (104A) mittels des ersten Agenten (114A) auf der ersten VM (102); und
Speichern der geschützten Daten (118) in dem Block des transienten Speichers (104A).

14. Das nicht-transitorische Computerspeichermedium nach Anspruch 13, wobei das Programmcodeverfahren ferner aufweist:
Empfangen, mittels der zweiten VM (102), einer Wiederherstellungsanforderungsnachricht von einer Benutzerraumanwendung, die auf der zweiten VM (102) ausgeführt wird, wobei die Wiederherstellungsanforderungsnachricht eine Anforderung für den zweiten Agenten (114B) darstellt, die geschützten Daten (118) an die Benutzerraumanwendung bereitzustellen; und
Übertragen der geschützten Daten (118) von dem zweiten Agenten (114B) an die Benutzerraumanwendung als Reaktion auf die Wiederherstellungsanforderungsnachricht.

15. Das nicht-transitorische Computerspeichermedium nach einem der Ansprüche 11 bis 14, aufweisend mindestens eines der folgenden Merkmale:
wobei die erste VM (102) auf einem ersten Rechenknoten (621) abgeschaltet wird, wobei die zweite VM (102) auf einem zweiten Rechenknoten (622) gestartet wird, der sich von dem ersten Rechenknoten (621) unterscheidet, wobei der Abschaltprozess auf der ersten VM (102) und der Startprozess auf der zweiten VM (102) Teil einer Migration einer virtuellen Maschine einer bestimmten virtuellen Maschine zwischen dem ersten und dem zweiten Rechenknoten (621, 622) sind;
wobei das Schreiben der geschützten Daten (118) auf die erste VM (102) durchgeführt wird, nachdem die Benutzerraumprozesse beendet sind, wobei das Lesen der geschützten Daten (118) auf der zweiten VM (102) durchgeführt wird, bevor die Benutzerraumprozesse gestartet werden.

## Revendications

1. Procédé informatisé de persistance sécurisée de données transitoires entre des redémarrages de machine virtuelle, le procédé comprenant les étapes consistant à :
terminer, par l'intermédiaire d'une première machine virtuelle (102), VM, au cours d'un processus d'arrêt pour la première VM (102), l'exécution de processus d'espace utilisateur sur la première VM (102) ;
écrire, par l'intermédiaire d'un premier agent (114A) s'exécutant sur la première VM (102) et après la fin des processus d'espace utilisateur sur la première VM (102), des données protégées (118) à partir de la mémoire transitoire (104A) de la première VM (102) sur un disque virtuel (142) accessible par la première VM (102) ;
arrêter la première VM (102) ;
lancer un processus de démarrage d'une seconde VM (102), la seconde VM (102) montant le disque virtuel (142) ; et
exécuter, au niveau de la seconde VM (102) et avant l'exécution des processus d'espace utilisateur, un second agent (114B), le second agent (114B) étant configuré pour :
lire les données protégées (118) à partir du disque virtuel (142) dans la mémoire transitoire (104B) de la seconde VM (102) ; et
supprimer les données protégées (118) à partir du disque virtuel (142).

2. Procédé informatisé selon la revendication 1, dans lequel le premier agent (114A) et le second agent (114B) mettent en œuvre des services de logiciel malveillant sur la première VM (102) et la seconde VM (102) respectivement, dans lequel les données protégées (118) incluent des informations de configuration associées aux services de logiciel malveillant, dans lequel le second agent (114B) utilise les informations de configuration pour configurer au moins un aspect des services de logiciel malveillant.

3. Procédé informatisé selon la revendication 1 ou 2, comprenant en outre les étapes consistant à :
recevoir, par l'intermédiaire du premier agent (114A), un message de demande de stockage provenant d'une application d'espace utilisateur s'exécutant sur la première VM (102), le message de demande de stockage représentant une demande pour le premier agent (114A) de stocker les données protégées (118), le message de demande de stockage incluant les données protégées (118) ;
attribuer un segment de la mémoire transitoire (104A) par l'intermédiaire du premier agent (114A) sur la première VM (102) ; et
stocker les données protégées (118) dans le segment de la mémoire transitoire (104A).

4. Procédé informatisé selon la revendication 3, comprenant en outre les étapes consistant à :
recevoir, par l'intermédiaire de la seconde VM (102), un message de demande de récupération provenant de l'application d'espace utilisateur s'exécutant sur la seconde VM (102), le message de demande de récupération représentant une demande pour que le second agent (114B) fournisse les données protégées (118) à l'application d'espace utilisateur ; et
transmettre les données protégées (118) du second agent (114B) à l'application d'espace utilisateur en réponse au message de demande de récupération.

5. Procédé informatisé selon l'une quelconque des revendications 1 à 4, comprenant au moins l'une des caractéristiques suivantes :
dans lequel la première VM (102) est arrêtée sur un premier nœud de calcul (621), dans lequel la seconde VM (102) est démarrée sur un second nœud de calcul (622) différent du premier nœud de calcul (621), dans lequel le processus d'arrêt sur la première VM (102) et le processus de démarrage sur la seconde VM (102) font partie d'une migration de machine virtuelle d'une machine virtuelle particulière entre les premier et second nœuds de calcul (621, 622) ;
dans lequel le processus d'arrêt sur la première VM (102) et le processus de démarrage sur la seconde VM (102) font partie d'un processus de redémarrage d'une machine virtuelle particulière sur un nœud de calcul unique ;
dans lequel l'écriture des données protégées (118) sur la première VM (102) est effectuée après la fin des processus d'espace utilisateur, dans lequel la lecture des données protégées (118) sur la seconde VM (102) est effectuée avant le début des processus d'espace utilisateur.

6. Système informatique comprenant au moins un nœud de calcul, chaque nœud de calcul du au moins un nœud de calcul comprenant :
un dispositif de mémoire transitoire fournissant une mémoire transitoire (104A) pour une ou plusieurs machines virtuelles (102), VM ;
au moins un processeur (719) ; et
un support lisible par ordinateur non transitoire sur lequel est stocké un code de programme exécutable par le au moins un processeur (719), le code de programme amenant le au moins un processeur (719) à :
terminer, par l'intermédiaire d'une première machine virtuelle (102), VM, au cours d'un processus d'arrêt pour la première VM (102), l'exécution de processus d'espace utilisateur sur la première VM (102) ;
écrire, par l'intermédiaire d'un premier agent (114A) s'exécutant sur la première VM (102) et après la fin de processus d'espace utilisateur sur la première VM (102), des données protégées (118) provenant de la mémoire transitoire (104A) de la première VM (102) sur un disque virtuel (142) accessible par la première VM (102) ;
arrêter la première VM (102) ;
lancer un processus de démarrage d'une seconde VM (102), la seconde VM (102) présentant un accès au disque virtuel (142) ; et
exécuter, au niveau de la seconde VM (102) et avant l'exécution des processus d'espace utilisateur, un second agent (114B), le second agent (114B) étant configuré pour :
lire les données protégées (118) à partir du disque virtuel (142) dans la mémoire transitoire (104B) de la seconde VM (102) ; et
supprimer les données protégées (118) à partir du disque virtuel (142).

7. Système informatique selon la revendication 6, dans lequel le premier agent (114A) et le second agent (114B) mettent en œuvre des services de logiciel malveillant sur la première VM (102) et la seconde VM (102) respectivement, dans lequel les données protégées (118) incluent des informations de configuration associées aux services de logiciel malveillant, dans lequel le second agent (114B) utilise les informations de configuration pour configurer au moins un aspect des services de logiciel malveillant.

8. Système informatique selon la revendication 6 ou 7, le code de programme amenant en outre le au moins un processeur (719) à :
recevoir, par l'intermédiaire du premier agent (114A), un message de demande de stockage provenant d'une application d'espace utilisateur s'exécutant sur la première VM (102), le message de demande de stockage représentant une demande pour le premier agent (114A) de stocker les données protégées (118), le message de demande de stockage incluant les données protégées (118) ;
attribuer un bloc de la mémoire transitoire (104A) par l'intermédiaire du premier agent (114A) sur la première VM (102) ; et
stocker les données protégées (118) dans le bloc de la mémoire transitoire (104A).

9. Système informatique selon la revendication 8, le code de programme amenant en outre le au moins un processeur (719) à :
recevoir, par l'intermédiaire de la seconde VM (102), un message de demande de récupération provenant de l'application d'espace utilisateur s'exécutant sur la seconde VM (102), le message de demande de récupération représentant une demande pour que le second agent (114B) fournisse les données protégées (118) à l'application d'espace utilisateur ; et
transmettre les données protégées (118) du second agent (114B) à l'application d'espace utilisateur en réponse au message de demande de récupération.

10. Système informatique selon l'une quelconque des revendications 6 à 9, comprenant au moins l'une des caractéristiques suivantes :
dans lequel la première VM (102) est arrêtée sur un premier nœud de calcul (621), dans lequel la seconde VM (102) est démarrée sur un second nœud de calcul (622) différent du premier nœud de calcul (621), dans lequel le processus d'arrêt sur la première VM (102) et le processus de démarrage sur la seconde VM (102) font partie d'une migration de machine virtuelle d'une machine virtuelle particulière entre les premier et second nœuds de calcul (621, 622) ;
dans lequel le processus d'arrêt sur la première VM (102) et le processus de démarrage sur la seconde VM (102) font partie d'un processus de redémarrage d'une machine virtuelle particulière sur un nœud de calcul unique ;
dans lequel l'écriture des données protégées (118) sur la première VM (102) est effectuée après la fin des processus d'espace utilisateur, dans lequel la lecture des données protégées (118) sur la seconde VM (102) est effectuée avant le début des processus d'espace utilisateur.

11. Support de stockage informatique non transitoire sur lequel est stocké un code de programme exécutable par un processeur (719), le code de programme mettant en œuvre un procédé de code de programme comprenant les étapes consistant à :
terminer, par l'intermédiaire d'une première machine virtuelle (102), VM, au cours d'un processus d'arrêt pour la première VM (102), l'exécution de processus d'espace utilisateur sur la première VM (102) ;
écrire, par l'intermédiaire d'un premier agent (114A) s'exécutant sur la première VM (102) et après la fin de processus d'espace utilisateur sur la première VM (102), des données protégées (118) provenant de la mémoire transitoire (104A) de la première VM (102) sur un disque virtuel (142) accessible par la première VM (102) ;
arrêter la première VM (102) ;
lancer un processus de démarrage d'une seconde VM (102), la seconde VM (102) présentant un accès au disque virtuel (142) ; et
exécuter, au niveau de la seconde VM (102) et avant l'exécution des processus d'espace utilisateur, un second agent (114B), le second agent (114B) étant configuré pour :
lire les données protégées (118) à partir du disque virtuel (142) dans la mémoire transitoire (104B) de la seconde VM (102) ; et
supprimer les données protégées (118) à partir du disque virtuel (142).

12. Support de stockage informatique non transitoire selon la revendication 11, dans lequel le premier agent (114A) et le second agent (114B) mettent en œuvre des services de logiciel malveillant sur la première VM (102) et la seconde VM (102) respectivement, dans lequel les données protégées (118) incluent des informations de configuration associées aux services de logiciel malveillant, dans lequel le second agent (114B) utilise les informations de configuration pour configurer au moins un aspect des services de logiciel malveillant.

13. Support de stockage informatique non transitoire selon la revendication 11 ou 12, dans lequel le procédé de code de programme comprend en outre les étapes consistant à :
recevoir, par l'intermédiaire du premier agent (114A), un message de demande de stockage provenant d'une application d'espace utilisateur s'exécutant sur la première VM (102), le message de demande de stockage représentant une demande pour le premier agent (114A) de stocker les données protégées (118), le message de demande de stockage incluant les données protégées (118) ;
attribuer un bloc de la mémoire transitoire (104A) par l'intermédiaire du premier agent (114A) sur la première VM (102) ; et
stocker les données protégées (118) dans le bloc de la mémoire transitoire (104A).

14. Support de stockage informatique non transitoire selon la revendication 13, dans lequel le procédé de code de programme comprend en outre les étapes consistant à :
recevoir, par l'intermédiaire de la seconde VM (102), un message de demande de récupération provenant de l'application d'espace utilisateur s'exécutant sur la seconde VM (102), le message de demande de récupération représentant une demande pour que le second agent (114B) fournisse les données protégées (118) à l'application d'espace utilisateur ; et
transmettre les données protégées (118) du second agent (114B) à l'application d'espace utilisateur en réponse au message de demande de récupération.

15. Support de stockage informatique non transitoire selon l'une quelconque des revendications 11 à 14, comprenant au moins l'une des caractéristiques suivantes :
dans lequel la première VM (102) est arrêtée sur un premier nœud de calcul (621), dans lequel la seconde VM (102) est démarrée sur un second nœud de calcul (622) différent du premier nœud de calcul (621), dans lequel le processus d'arrêt sur la première VM (102) et le processus de démarrage sur la seconde VM (102) font partie d'une migration de machine virtuelle d'une machine virtuelle particulière entre les premier et second nœuds de calcul (621, 622) ;
dans lequel l'écriture des données protégées (118) sur la première VM (102) est effectuée après la fin des processus d'espace utilisateur, dans lequel la lecture des données protégées (118) sur la seconde VM (102) est effectuée avant le début des processus d'espace utilisateur.
